(19) Europäisches Patentamt
European Patent Office
Office européen des brevets

(11) **EP 2 544 276 A1**

(12) **EUROPEAN PATENT APPLICATION**
published in accordance with Art. 153(4) EPC

(43) Date of publication:
**09.01.2013 Bulletin 2013/02**

(51) Int Cl.:
*H01M 4/525* (2010.01)    *H01M 4/131* (2010.01)
*H01M 4/505* (2010.01)

(21) Application number: **11750763.2**

(22) Date of filing: **03.03.2011**

(86) International application number:
**PCT/JP2011/054935**

(87) International publication number:
**WO 2011/108654 (09.09.2011 Gazette 2011/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010   JP 2010048083**

(71) Applicant: **JX Nippon Mining & Metals Corporation
Chiyoda-ku
Tokyo 100-0004 (JP)**

(72) Inventor: **SATOH,Hirohito
Kitaibaraki-shi
Ibaraki 319-1535 (JP)**

(74) Representative: **Yeadon, Mark
Yeadon IP Limited
Leeds Innovation Centre
103 Clarenton Road
Leeds
LS2 9DF (GB)**

(54) **POSITIVE ELECTRODE ACTIVE MATERIAL FOR LITHIUM-ION BATTERIES, POSITIVE ELECTRODE FOR LITHIUM-ION BATTERIES, AND LITHIUM-ION BATTERY**

(57)     The present invention provides a positive electrode active material for lithium ion battery which attains a lithium ion battery having high safety. The positive electrode active material for lithium ion battery has a layer structure represented by the compositional formula: $Li_x(Ni_yM_{1-y})O_z$ (wherein M represents Mn and Co, x denotes a number of 0.9 to 1.2, y denotes a number of 0.6 to 0.65, and z denotes a number of 1.8 to 2.4). When a lithium ion battery using a positive electrode mix produced by the positive electrode active material, a binder, and a conductive material in a ratio by weight of 91%, 4.2%, and 4.8%, respectively, is charged to 4.3V, and then an electrolytic solution prepared by dissolving $1 M-LiPF_6$ in a mixture solvent of ethylene carbonate (EC)-dimethyl carbonate (DMC) (volume ratio 1 : 1) is used based on 1.0 mg of the positive electrode mix to measure the obtained lithium ion battery by differential scanning calorimetry (DSC) performed at a temperature rise rate of 5°C/min, a difference $\Delta T = T1 - T2$ between a first exothermic peak temperature T1 (°C) and a temperature T2 at which an exothermic strength is 1/2 of the first exothermic peak strength (T2 < T1) satisfies the equation: $\Delta T \geq 10$ (°C).

FIG. 1

EP 2 544 276 A1

**Description**

BACKGROUND OF THE INVENTION

1. Field of the Invention

The present invention relates to a positive electrode active material for lithium ion battery, a positive electrode for lithium ion battery, and a lithium ion battery.

2. Description of Related Art

A lithium ion battery using, as its material, lithium which has a small specific gravity and tends to enter into an electrochemical reaction can store energy two to three times that of a nickel-cadmium battery or nickel-metal hydride battery having the same weight. The lithium ion battery has such a superb advantage whereas it has a problem concerning safety.

With regard to lithium ion batteries, there have been many reports concerning accidents caused by abnormal heat and ignition of batteries because materials constituting the batteries are burned for some reason. The phenomena of abnormal heat generation and ignition that occur in lithium ion batteries are called "thermal runaway". When the temperature of a battery is raised, materials contained in the battery are decomposed to generate heat. Then, if the rate of heat generation inside of the battery exceeds the rate of heat radiation from the battery, this induces thermal runaway, causing a fire.

Various methods are conventionally used to improve the safety of a lithium ion battery. For example, Patent document 1 discloses a positive electrode material for lithium secondary battery comprising, as a lithium-containing complex oxide, a mixture of a lithium-containing complex oxide having a layer rock-salt structure and a lithium-containing complex oxide having a pseudo-spinel structure, wherein the lithium-containing complex oxide is represented by the general formula $Li_pCo_xM_yO_zF_a$ (where M represents at least one element selected from the group consisting of transition metal elements other than Co, Al, Sn, and alkali earth metal elements, $0.9 \leq p \leq 1.1$, $0.97 \leq x \leq 1.00$, $0 \leq y \leq 0.03$, $1.9 \leq z \leq 2.1$, $x + y = 1$, and $0 \leq a \leq 0.02$). Patent document 1 describes that a positive electrode material for lithium secondary battery, which comprises a lithium-containing complex oxide and is superior in thermal safety, volumetric capacity density, and charge/discharge cycle characteristics, can be provided.

Also, Patent document 2 discloses a positive electrode active material for nonaqueous electrolyte secondary battery comprising at least a lithium transition metal complex oxide having a spinel structure, wherein the exothermic onset temperature of the lithium transition metal complex oxide in the measurement using differential scanning calorimetry is 220°C or more and calorific value of the lithium transition metal complex oxide in the measurement using differential scanning calorimetry is 700 to 900 mJ/mg. Patent document 2 describes that a positive electrode active material for nonaqueous electrolyte secondary battery having excellent battery characteristics even in a severer working environment can be provided.

Further, Patent document 3 discloses a lithium secondary battery comprising a positive electrode using a lithium-manganese complex oxide having a spinel structure as a positive electrode active material and a negative electrode using a carbon material as a negative electrode active material which are impregnated with a nonaqueous electrolytic solution, wherein the total calorific value of the lithium-manganese complex oxide measured by a differential scanning calorimeter is 1.0 kJ/g or less. Patent document 3 describes that this structure can provide a nonaqueous electrolyte secondary battery being superior in safety.

(Patent document 1) Japanese Patent Application Publication No. 2006-164758
(Patent document 2) Japanese Patent Application Publication No. 2004-227790
(Patent document 3) Japanese Patent Application Publication No. 2004-6264

SUMMARY OF INVENTION

However, the safety of a lithium ion battery is an extremely important problem and there is a room for improvement of a high-quality positive electrode active material for lithium ion battery.

In view of this situation, an object of the present invention is to provide a positive electrode material for lithium ion battery to attain a lithium ion battery being superior in safety.

The inventor has made earnest studies, and as a result, found that there is a close correlation between the shape of the DSC (differential scanning calorific measurement) exothermic curve of a positive electrode active material and the safety of a battery to be produced. Specifically, the inventor has found that, when a difference between a first exothermic peak temperature and a temperature at which an exothermic strength is 1/2 of the first exothermic peak strength is a certain value or more in the DSC (differential scanning calorimetry) curve of the positive electrode active material to be measured, the battery generates heat so gently that thermal runaway can be well restrained.

According to a first aspect of the present invention completed based on the above teachings, there is provided a positive electrode active material for lithium ion battery which has a layer structure represented by the compositional formula: $Li_x(Ni_yM_{1-y})O_z$ (wherein M represents Mn and Co, x denotes a number of 0.9 to 1.2, y denotes a number of 0.6 to 0.65, and z denotes a number of 1.8 to 2.4), wherein, when a lithium ion battery using a positive electrode mix produced by the positive electrode active material, a binder, and a conductive material in a ratio by weight of 91%, 4.2%, and 4.8%, respectively, is charged to 4.3 V, and then an electrolytic solution prepared by dissolving 1 M-$LiPF_6$ in a mixture solvent of ethylene carbonate (EC)-dimethyl carbonate (DMC) (volume ratio 1 : 1) is used based on 1.0 mg of the positive electrode mix to measure the obtained lithium ion battery by differential scanning calorimetry (DSC) performed at a temperature rise rate of 5°C/min, a difference $\Delta T = T1 - T2$ between a first exothermic peak temperature T1 (°C) and a temperature T2 at which an exothermic strength is 1/2 of the first exothermic peak strength (T2 < T1) satisfies the equation: $\Delta T \geq 10$ (°C).

In an embodiment of the positive electrode active material for lithium ion battery according to the present invention, $\Delta T$ satisfies the equation: $\Delta T \geq 12$ (°C).

In another embodiment of the positive electrode active material for lithium ion battery according to the present invention, $\Delta T$ satisfies the equation: $\Delta T \geq 14$ (°C).

In a further embodiment of the positive electrode active material for lithium ion battery according to the present invention, T1 is 240°C or more.

According to another aspect of the present invention, there is provided a positive electrode for lithium ion battery using the positive electrode active material for lithium ion battery according to the present invention.

According to another aspect of the present invention, there is provided a lithium ion battery using the positive electrode for lithium ion battery according to the present invention.

ADVANTAGEOUS EFFECT OF THE INVENTION

According to the present invention, a positive electrode active material for lithium ion battery which attains a lithium ion battery having high safety can be provided.

BRIEF DESCRIPTION OF DRAWINGS

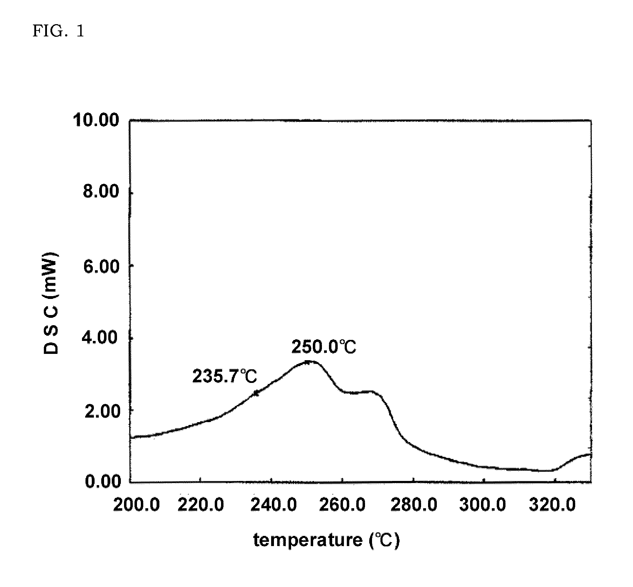

FIG. 1 is a DSC exothermic curve in Example 1.

DETAILED DESCRIPTION OF EMBODIMENTS

(Structure of positive electrode active material for lithium ion battery)

As the material of the positive electrode active material for lithium ion battery according to the present invention, compounds useful as the positive electrode active material for the positive electrode of usual lithium ion batteries may be widely used. It is particularly preferable to use a lithium-containing transition metal oxide such as lithium cobaltate ($LiCoO_2$), lithium nickelate ($LiNiO_2$), and lithium manganate ($LiMn_2O_4$). The positive electrode active material for lithium ion battery which is produced using materials like the above has a layer structure represented by the compositional formula: $Li_x(Ni_yM_{1-y})O_z$ (wherein M represents Mn and Co, x denotes a number of 0.9 to 1.2, y denotes a number of 0.6 to 0.65, and z denotes a number of 1.8 to 2.4).

The ratio of lithium to the total metals in the positive electrode active material for lithium ion battery is 0.9 to 1.2. It is because a stable crystal structure is scarcely kept when the ratio is less than 0.9 whereas high capacity of the battery cannot be ensured when the ratio exceeds 1.2.

The positive electrode active material for lithium ion battery is constituted of primary particles, secondary particles formed from aggregated primary particles, or a mixture of primary particles and secondary particles. The average particle diameter of these primary and secondary particles of the positive electrode active material for lithium ion battery is preferably 2 to 15 $\mu$m.

When the average particle diameter is less than 2 $\mu$m, the application to the current collector is made difficult. When the average particle diameter exceeds 15 $\mu$m, voids are easily produced when the active material particles are filled, leading to less fillability. The average particle diameter is more preferably 3 to 12 $\mu$m.

(Structure of positive electrode for lithium ion battery and lithium ion battery using positive electrode)

The positive electrode for lithium ion battery according to an embodiment of the present invention has a structure in which a positive electrode mix prepared by blending, for example, a positive electrode active material for lithium ion battery which has the aforementioned structure, a conductive material, and a binder is applied to one or both surfaces of a current collector made of an aluminum foil or the like. Also, a lithium ion battery according to an embodiment of the present invention is provided with the positive electrode for lithium ion battery having such a structure.

A lithium ion battery manufactured using the positive electrode active material for lithium ion battery according to the present invention is defined as follows by differential scanning calorimetry. Here, the differential scanning calorimetry is used to measure a difference in calorific value along with temperature variation between a sample and a standard material as a function of temperature. When a difference between a first exothermic peak temperature and a temperature at which an exothermic strength is 1/2 of the first exothermic peak strength in the curve (DSC exothermic curve) written according to values measured at this time is a predetermined value or more as will be mentioned later, the battery generates heat so gently that thermal runaway can be well restrained. It is because the thermal runaway occurs when heat radiation does not exceed heat generation, and generally, there is a larger allowance for heat radiation as heat generation along with rise in temperature is increased more gently.

Specifically, after a lithium ion battery using a positive electrode mix produced using the positive electrode active material according to the present invention, a binder, and a conductive material in a ratio by weight of 91%, 4.2%, and 4.8% is charged to 4.3 V, an electrolytic solution prepared by dissolving 1 $M$-$LiPF_6$ in a mixture solvent of ethylene carbonate (EC) and dimethyl carbonate (DMC) (volume ratio 1 : 1) is used based on 1.0 mg of the positive electrode mix to measure the obtained lithium ion battery by differential scanning calorimetry (DSC) performed at a temperature rise rate of 5°C/min. At this time, a difference $\Delta T$ between a first exothermic peak temperature T1 (°C) and a temperature T2 at which an exothermic strength is 1/2 of the first exothermic peak strength (T2 < T1) satisfies the equation: $\Delta T \geq 10$ (°C). $\Delta T$ preferably satisfies the equation: $\Delta T \geq 12$ (°C) and more preferably satisfies the equation: $\Delta T \geq 14$ (°C).

The first exothermic peak temperature T1 (°C) is preferably 240°C or more.

(Method for producing positive electrode active material for lithium ion battery)

Next, a method for producing a positive electrode active material for lithium ion battery according to the embodiment of the present invention will be explained in detail.

First, a metal salt solution is prepared. The metal is Ni, Co, or Mn. Also, the metal salt is a sulfate, chloride, nitrate, acetate, or the like and, particularly, a nitrate is preferable. This is because the nitrate can be calcined as it is, so that a cleaning process can be omitted, even if the nitrate is mixed as impurities in the calcination raw material, and the nitrate functions as an oxidant to promote oxidation of metals in the calcination raw material. The metal salt is prepared such that each metal is contained in a desired molar ratio. The molar ratio of each metal in the positive electrode active material is thereby determined.

Next, lithium carbonate is suspended in pure water, and then, a metal salt solution of the above metal is poured into the mixture to produce a metal carbonate solution slurry. At this time, lithium-containing carbonate microparticles precipitate in the slurry. When sulfate, chloride and the like are employed as metal salt, the lithium compounds generated in precipitation are not used as lithium raw material at heat treatment, and slurry is washed with a saturated lithium carbonate solution and then separated by filtration. When nitrate and acetate are employed as metal salt, the lithium compounds generated in precipitation are used as lithium raw material at heat treatment, and slurry is not washed and separated as it is by filtration, followed by drying, thereby enabling the salt to be used as a calcination precursor. Next, the separated lithium-containing carbonate is dried to obtain a lithium salt composite (precursor of a positive electrode active material for lithium ion battery) powder.

Next, a calcinating container having a predetermined capacity is prepared and the powder of the precursor of a positive electrode active material for lithium ion battery is filled in the calcinating container. Next, the calcinating container filled with the powder of the precursor of the positive electrode active material for lithium ion battery is transferred to a kiln to calcine. The calcination is performed by keeping the container with heating for a predetermined time in an oxygen atmosphere. Also, it is desirable that the calcination is performed under a pressure of 101 to 202 KPa because the quantity of oxygen in the composition is increased. The calcination temperature is appropriately set corresponding to the amount of Li in the positive electrode material precursor used as the raw material. Specifically, because the calcination tends to progress when the amount of Li is large, the optimum value of calcination temperature is shifted to a lower temperature side as compared with the case where the amount of Li is small. As mentioned above, the relation between the calcination temperature and the amount of Li contained in the positive electrode active material precursor affects the nature of a positive electrode active material for lithium ion battery and hence affects the battery characteristics of a lithium ion battery using the positive electrode active material.

Subsequently, the powder is taken out of the calcinating container and ground to obtain a positive electrode active material powder.

Also, the positive electrode for lithium ion battery according to the present invention is manufactured by mixing the positive electrode active material manufactured in the above manner, a conductive material, and a binder to prepare a positive electrode mix, and by disposing the positive electrode mix on one or both surfaces of a current collector made of an aluminum foil or the like. Moreover, the lithium ion battery according to the present invention is manufactured using this positive electrode for lithium ion battery.

Examples

Although examples are provided for facilitating understanding of the present invention and its advantage, the present invention is not limited to the following examples.

(Examples 1 to 7)

First, lithium carbonate to be charged in an amount as described in Table 1 was suspended in 3.2 liter of pure water, and then, 4.8 liter of a metal salt solution was added to the mixture. Here, the metal salt solution was prepared in such a manner that the compositional ratio of a hydrate of a nitrate of each metal was that described in Table 1 and the number of moles of all metals was 14.

In this case, the amount of lithium carbonate to be suspended is a value at which x in the formula $Li_x(Ni_yM_{1-y})O_z$ of a product (positive electrode for lithium ion secondary battery, that is, positive electrode active material) accords to that described in Table 1 and is calculated according to the following equation.

$$W\ (g) = 73.9 \times 14 \times (1 + 0.5X) \times A$$

In the above formula, "A" is a value multiplied in order to subtract, in advance, the amount of lithium originated from a lithium compound other than lithium carbonate left in the raw material after filtration besides the amount required for the precipitation reaction. "A" is 0.9 when, like the case of using a nitrate or acetate, the lithium salt reacts as the calcination raw material, and 1.0 when, like the case of using a sulfate or chloride, the lithium salt does not react as the calcination raw material.

Though lithium-containing carbonate microparticles were precipitated in the solution by this treatment, this precipitate was separated by filtration using a filter press.

Next, the precipitate was dried to obtain a lithium-containing carbonate (precursor of positive electrode active material for lithium ion battery).

Next, a calcinating container was prepared to fill the lithium-containing carbonate therein. Next, the calcinating container was placed in an oxygen ambient furnace under atmospheric pressure and heated to the calcination temperature described in Table 1 for 6 hours. Then, the calcinating container was kept at this temperature under heating for 2 hours, and then, cooled to obtain an oxide. Then, the obtained oxide was pulverized to obtain a positive electrode active material powder for lithium ion battery.

(Examples 8 and 9)

In Example 8, the same procedures as in Examples 1 to 7 were carried out except that each metal of the raw material was altered to the composition shown in Table 1 and the calcination was performed not under an atmospheric pressure but under a pressure of 120 KPa. In Example 9, the same procedures as in Example 8 were carried out except that each metal of the raw material was altered to the composition shown in Table 1 and the calcination was performed under a pressure of 180 KPa.

(Comparative Examples 1 to 3)

In Comparative Examples 1 to 3, the same procedures as in Examples 1 to 7 were carried out except that the amount of lithium carbonate to be suspended and calcination temperature were altered.

(Evaluation)

The contents of Li, Ni, Mn, and Co in each positive electrode active material were measured by induction coupling plasma atomic emission spectrometry (ICP-AES) to calculate the compositional ratio (molar ratio) of each metal.

Also, the crystal structure was confirmed to be a layer structure by X-ray analysis.

Then, the DSC exothermic curve of this positive electrode active material was measured as follows. First, 91 % of the positive electrode material, 4.2% of a binder, and 4.8% of a conductive material were weighed on weight basis. The positive electrode active material and the conductive material were mixed in a solution prepared by dissolving the binder in an organic solvent (N-methylpyrrolidone) into a slurry to obtain a positive electrode mix, which was then applied to the surface of an aluminum foil and pressed after dried to produce a positive electrode. This positive electrode was processed by punching such that the weight of the positive electrode mix was 10.0 to 10.2 mg. Subsequently, a 2032-type coin cell for evaluation in which Li was used as the counter electrode was manufactured and an electrolytic solution prepared by dissolving $1M\text{-}LiPF_6$ in ethylene carbonate (EC)-dimethyl carbonate (DMC) (volume ratio 1 : 1) was used. Then, the coin cell impregnated with the electrolytic solution was charged up to 4.3 V at a current density of 0.2C, then discharged down to 3.0 V, and then, charged up to 4.3 V again.

Next, the electrode was taken out of the coin cell, washed with dimethyl carbonate (DMC), and then, the positive electrode mix was cut from the positive electrode. 1.0 mg of the positive electrode mix and an electrolytic solution prepared by dissolving $1M\text{-}LiPF_6$ in ethylene carbonate (EC)-dimethyl carbonate (DMC) (volume ratio 1 : 1) were sealed together in a SUS sample pan, which was subjected to differential scanning calorimetry at a temperature rise rate of 5°C/min by using DSC6200 manufactured by Seiko Instruments Inc.. A DSC exothermic curve was obtained from this measurement, and a peak temperature T1 (°C) of a first peak, a temperature T2 (°C) at which the exothermic strength was 1/2 of the peak height of the first peak, and a difference ΔT between these temperatures T1 and T2 (T2 <T1) were obtained from the DSC exothermic curve. Also, a nail having a diameter of 2 mm was allowed to penetrate through the battery in the direction of the thickness in a room kept at 25°C to generate heat, thereby measuring the temperature of the surface of the battery after 30 sec.

These results are shown in Table 1. Also, FIG. 1 shows the DSC exothermic curve according to Example 1 shown in Table 1 respectively.

(Table 1)

| | Amount of lithium carbonate to be suspended (g) | Compositional ratio of each metal in all metals except Li | | | calcination temperature (°C) | x | z | T1 (°C) | T2 (°C) | ΔT | Temperature of the surface after 30 sec (°C) |
|---|---|---|---|---|---|---|---|---|---|---|---|
| | | Ni | Mn | Co | | | | | | | |
| Example 1 | 1415 | 60 | 25 | 15 | 880 | 1.02 | 2.30 | 250 | 236 | 14 | 33 |
| Example2 | 1415 | 60 | 25 | 15 | 900 | 1.02 | 2.22 | 251 | 240 | 11 | 32 |
| Example3 | 1415 | 60 | 25 | 15 | 860 | 1.02 | 2.28 | 248 | 234 | 14 | 32 |
| Example4 | 1443 | 60 | 25 | 15 | 860 | 1.08 | 2.30 | 250 | 237 | 13 | 34 |
| Example5 | 1415 | 65 | 20 | 15 | 880 | 1.02 | 2.24 | 253 | 240 | 13 | 34 |
| Example6 | 1415 | 65 | 20 | 15 | 850 | 1.02 | 2.29 | 248 | 236 | 12 | 35 |
| Example7 | 1415 | 60 | 25 | 15 | 920 | 1.02 | 2.18 | 249 | 239 | 10 | 36 |
| Example8 | 1415 | 60 | 25 | 15 | 860 | 1.02 | 2.33 | 251 | 236 | 15 | 31 |
| Example9 | 1415 | 60 | 25 | 15 | 860 | 1.02 | 2.36 | 255 | 237 | 18 | 30 |
| Comparative Example1 | 1424 | 60 | 25 | 15 | 940 | 1.04 | 2.30 | 252 | 249 | 3 | 41 |
| Comparative Example2 | 1415 | 65 | 20 | 15 | 830 | 1.02 | 2.26 | 246 | 240 | 6 | 39 |
| Comparative Example3 | 1415 | 60 | 25 | 15 | 840 | 1.02 | 2.20 | 244 | 235 | 9 | 38 |

**Claims**

1. A positive electrode active material for lithium ion battery which has a layer structure represented by the compositional formula:

   $Li_x(Ni_yM_{1-y})O_z$ (wherein M represents Mn and Co, x denotes a number of 0.9 to 1.2, y denotes a number of 0.6 to 0.65, and z denotes a number of 1.8 to 2.4), wherein,
   when a lithium ion battery using a positive electrode mix produced by the positive electrode active material, a binder, and a conductive material in a ratio by weight of 91%, 4.2%, and 4.8%, respectively, is charged to 4.3V, and then an electrolytic solution prepared by dissolving 1 M-$LiPF_6$ in a mixture solvent of ethylene carbonate (EC)-dimethyl carbonate (DMC) (volume ratio 1 : 1) is used based on 1.0 mg of the positive electrode mix to measure the obtained lithium ion battery by differential scanning calorimetry (DSC) performed at a temperature rise rate of 5°C/min, a difference $\Delta T = T1 - T2$ between a first exothermic peak temperature T1 (°C) and a temperature T2 at which an exothermic strength is 1/2 of the first exothermic peak strength (T2 < T1) satisfies the equation: $\Delta T \geq 10$ (°C).

2. The positive electrode active material for lithium ion battery of claim 1, wherein $\Delta T$ satisfies the equation: $\Delta T \geq 12$ (°C).

3. The positive electrode active material for lithium ion battery of claim 2, wherein $\Delta T$ satisfies the equation: $\Delta T \geq 14$ (°C).

4. The positive electrode active material for lithium ion battery of any one of claims 1 to 3, wherein T1 is 240°C or more.

5. A positive electrode for lithium ion battery using the positive electrode active material for lithium ion battery of any one of claims 1 to 4.

6. A lithium ion battery using the positive electrode for lithium ion battery of claim 5.

FIG. 1

<table>
<tr><td colspan="2">**INTERNATIONAL SEARCH REPORT**</td><td>International application No.<br>PCT/JP2011/054935</td></tr>
</table>

**A. CLASSIFICATION OF SUBJECT MATTER**
*H01M4/525*(2010.01)i, *H01M4/131*(2010.01)i, *H01M4/505*(2010.01)i

According to International Patent Classification (IPC) or to both national classification and IPC

**B. FIELDS SEARCHED**

Minimum documentation searched (classification system followed by classification symbols)
H01M4/525, H01M4/131, H01M4/505

Documentation searched other than minimum documentation to the extent that such documents are included in the fields searched
Jitsuyo Shinan Koho          1922-1996   Jitsuyo Shinan Toroku Koho    1996-2011
Kokai Jitsuyo Shinan Koho    1971-2011   Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2002/086993 A1 (Yuasa Corp.),<br>31 October 2002 (31.10.2002),<br>pages 2, 3<br>& EP 1391950 A1      & EP 2144314 A2 | 1-6 |
| Y | JP 11-307094 A (Chuo Denki Kogyo Co., Ltd.),<br>05 November 1999 (05.11.1999),<br>paragraphs [0008] to [0010]<br>(Family: none) | 1-6 |
| Y | JP 2004-227790 A (Nichia Chemical Industries, Ltd.),<br>12 August 2004 (12.08.2004),<br>claim 2; paragraphs [0009], [0010]<br>(Family: none) | 1-6 |

☒ Further documents are listed in the continuation of Box C.      ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
24 May, 2011 (24.05.11)

Date of mailing of the international search report
07 June, 2011 (07.06.11)

Name and mailing address of the ISA/
Japanese Patent Office

Authorized officer

Facsimile No.

Telephone No.

Form PCT/ISA/210 (second sheet) (July 2009)

**INTERNATIONAL SEARCH REPORT**

| International application No. |
| --- |
| PCT/JP2011/054935 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-164053 A  (Samsung SDI Co., Ltd.),<br>07 June 2002 (07.06.2002),<br>paragraphs [0060] to [0063]<br>& US 6984469 B2 | 1-6 |
| Y | JP 2006-156126 A  (Sumitomo Metal Mining Co., Ltd.),<br>15 June 2006 (15.06.2006),<br>paragraphs [0137] to [0152]<br>(Family: none) | 4 |
| A | JP 2005-302628 A  (Toshiba Corp.),<br>27 October 2005 (27.10.2005),<br>entire text; fig. 7 to 9<br>(Family: none) | 1-6 |
| A | JP 2005-332707 A  (Toshiba Corp.),<br>02 December 2005 (02.12.2005),<br>entire text; fig. 7<br>(Family: none) | 1-6 |
| A | JP 2002-63901 A  (Mitsui Chemicals, Inc.),<br>28 February 2002 (28.02.2002),<br>entire text; fig. 4<br>(Family: none) | 1-6 |

Form PCT/ISA/210 (continuation of second sheet) (July 2009)

**EP 2 544 276 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006164758 A
- JP 2004227790 A
- JP 2004006264 A